# EUROPÄISCHE PATENTANMELDUNG

(11) **EP 0 935 105 A2**
(43) Veröffentlichungstag der Anmeldung: **11.08.1999**
(21) Anmeldenummer: 99101973.8
(22) Anmeldetag: 01.02.1999
(51) Int. Cl.: F24F 13/02

(54) **Rahmen aus Blech-Hohlprofilen zum Anbringen an den Enden von Blechkanälen**

(30) Priorität: 04.02.1998 DE 29801851 U
(71) Anmelder: EWK Eisenwerke Kaiserslautern GmbH, 67655 Kaiserslautern (DE); Buser, Hermann, 67659 Kaiserslautern (DE)
(72) Erfinder: Buser, Hermann, 67659 Kaiserslautern (DE)
(74) Vertreter: Patentanwälte Möll und Bitterich

(57) **Zusammenfassung**

Gegenstand der Erfindung sind Rahmenecken, die in einem Stück aus einem Blech-Hohlprofil (1) hergestellt werden und eine durchgehende Befestigungsöffnung (5) aufweisen. Das Blech-Hohlprofil (1) erhält einen Gehrungsausschnitt (10'), wenigstens ein der Größe und Position der Befestigungsöffnung (5) entsprechendes Loch (17) und wird anschließend im Bereich des Gehrungsausschnitts (10') zu einem Eck gebogen. Die sich dabei überlappenden Blechlagen (15) werden anschließend miteinander verbunden, beispielsweise durch eine mechanische Prägung. Dadurch entsteht eine sehr stabile Eckverbindung.

## Beschreibung

Die Erfindung betrifft Rahmen aus einem Blech-Hohlprofil gemäß dem Oberbegriff des Anspruchs 1 zum Anbringen an den Enden von Blechkanälen mit eckigem Querschnitt.

Blechkanäle für die Raumlüftung werden üblicherweise aus Stahlblechen einer Stärke bis zu 1,5 mm gefertigt. Dabei werden bekannte Vorrichtungen wie Plasmamaschine, Kanalformer und automatische Profilsäge verwendet.

Man unterscheidet zwei Arten von Blechkanälen: Rohre mit rundem Querschnitt und Rohre mit eckigem Querschnitt, beispielsweise Rechteckrohre, Kanäle. Die vortiegende Erfindung bezieht sich auf Kanäle mit eckigem Querschnitt.

Um die Blechkanäle miteinander zu verbinden, werden nach dem Stand der Technik spezielle Flansche angebracht. Bei einem Rechteckkanal bestehen die Flansche aus vier Abschnitten eines Blech-Hohlprofils, die an den vier Ecken mit Eckwinkeln verbunden werden. Diese vormontierten Rahmen werden auf den Blechkanal geschoben und mittels Schweißpunkt oder Fügen befestigt. In den Eckwinkeln befinden sich Befestigungsöffnungen, so daß bei der Montage Schrauben und Muttern verwendet werden können. Diese Verbindungsart nennt man Vierlochverbindung. Die Vierlochverbindung findet heute bei fast allen raumlufttechnischen Anlagen Anwendung.

Das Zusammenbauen der Rahmenprofile und Einfügen der Eckwinkel ist heute weitgehend Handarbeit. Der Grund hierfür sind die derzeit handelsüblichen Automaten, die so teuer und unflexibel sind, daß sich die Handarbeit rechnet.

Der vorliegenden Erfindung liegt die Aufgabe zugrunde, einen Rahmen der eingangs genannten Art anzugeben, der sich aus den handelsüblichen Blech-Hohlprofilen vollautomatisch herstellen läßt.

Diese Aufgabe wird gelöst durch einen Rahmen mit den Merkmalen des Anspruchs 1.

Der vorliegenden Erfindung liegt die Idee zugrunde, den kompletten Rahmen in einem Stück aus dem Blech-Hohlprofil herzustellen. Die Beschaffung und Handmontage der gesonderten Eckwinkel entfällt. Die paßgenaue Herstellung der Gehrungsausschnitte usw. läßt sich mit einfachen Stanz-, Schneid- und Biegeautomaten durchführen. Dabei wird darauf geachtet, daß im Bereich der Gehrungsausschnitte noch Restmaterial an der Außenkante des Blech-Hohlprofils stehen bleibt.

Falls die Befestigungsöffnung im so hergestellten Rahmeneck nicht stabil genug sein sollte, kann sie zusätzlich mit einer Unterlegscheibe verstärkt werden.

Gemäß einer vorteilhaften Weiterbildung der Erfindung läßt man im Bereich des Gehrungsausschnitts Blechlappen stehen, die sich am fertig gebogenen Rahmen im Bereich der Befestigungsöffnung überlappen. Beim Anziehen der Schrauben-Mutter-Verbindung werden diese sich überlappenden Blechlappen ineinander verklemmt und es entsteht eine stabile Eckenkonstruktion.

Eine noch stabilere Eckenkonstruktion erhält man, wenn man im Bereich des Gehrungsausschnitts und parallel zur Längskante des Blech-Hohlprofils einen integralen Blechstreifen stehen läßt, der nach dem Fertigstellen des Rahmens eine das Rahmeneck verstärkende Falte bildet. Auf diese Weise besteht eine materialschlüssige Verbindung zwischen den Rahmenschenkeln nicht nur im Bereich der Außenkante, sondern auch im Bereich der Innenkante.

Damit die Falte möglichst wenig stört, legt man sie parallel zur Längskante des Blech-Hohlprofils.

Sollte die sich im Inneren des Kanals befindende Falte Störungen verursachen, kann sie auch beseitigt werden.

An einem kompletten Rahmen können nur drei der vier Eckverbindungen mit Hilfe von Gehrungsschnitten hergestellt werden. Die vierte Eckverbindung muss daher anders hergestellt werden. Der vorliegenden Erfindung liegt daher die Aufgabe zugrunde, auch für diesen Fall eine besonders einfache und mechanisch stabile Lösung anzugeben.

Diese Aufgabe wird gelöst durch einen Rahmen mit den Merkmalen des Anspruchs 7.

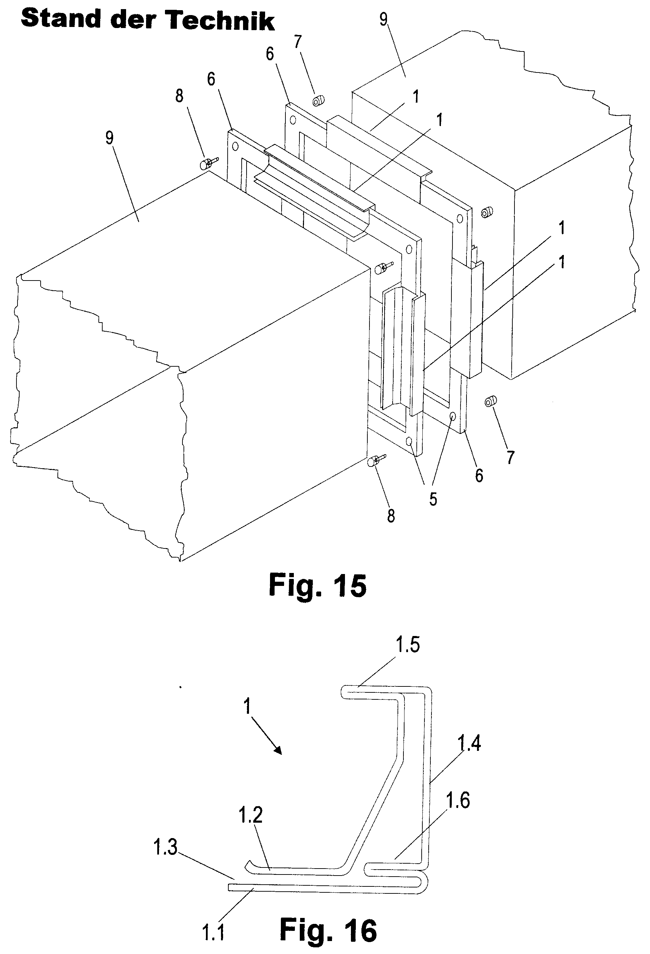

Anhand der Zeichnung soll die Erfindung in Form von Ausführungsbeispielen näher erläutert werden. Es zeigen
- Fig. 15: als Sprengbild eine herkömmliche Verbindung zweier Blechkanäle mit rechteckigem Querschnitt unter Verwendung von Blech-Hohlprofilen und Eckwinkeln,
- Fig. 1: ein erstes Ausführungsbeispiel eines Blech-Hohlprofils mit Gehrungsausschnitt,
- Fig. 2: eine unter Verwendung des Gehrungsausschnitts nach Fig. 1 hergestellte Rahmenecke,
- Fig. 3: eine unter Verwendung des Gehrungsausschnitts der Fig. 1 hergestellte und verstärkte Rahmenecke,
- Fig. 4: ein zweites Ausführungsbeispiel eines Blech-Hohlprofils mit Gehrungsausschnitt,
- Fig. 5: eine unter Verwendung des Gehrungsausschnitts der Fig. 4 hergestellte Rahmenecke,
- Fig. 6: ein drittes Ausführungsbeispiel eines Blech-Hohlprofils mit Gehrungsausschnitt,
- Fig. 7: eine unter Verwendung des Gehrungsausschnitts der Fig. 6 hergestellte Rahmenecke,
- Fig. 8: ein viertes Ausführungsbeispiel eines Blech-Hohlprofils mit Gehrungsausschnitt,
- Fig. 9: eine unter Verwendung des Gehrungsausschnitts der Fig. 8 hergestellte Rahmenecke,
- Fig. 10 bis 12: eine fünfte Rahmenecke als Draufsicht und als Seitenansichten,
- Fig. 13: eine Ansicht der Blechlagen der fünften Rahmenecke vor der Verbindung,
- Fig. 14: eine Ansicht der Blechlagen der Fig. 13 nach der Verbindung und die
- Fig. 16 bis 20: Querschnitte diverser Blech-Hohlprofile, mit denen die erfindungsgemäße Eckkonstruktion realisierbar ist.

Fig. 15 zeigt in perspektivischer Darstellung und in Form eines Sprengbildes einen Verbindungsstoß zweier Blechkanäle 9 mit rechteckigem Querschnitt nach dem Stand der Technik. Auf die Enden der Kanäle 9 werden aus acht Einzelteilen bestehende Rahmen aufgeschoben. Es handelt sich dabei um vier Abschnitte eines Blech-Hohlprofils 1, das anhand der Fig. 16 noch näher beschrieben werden soll, und vier gesondert hergestellte Eckwinkel 6, von denen jeder mit einer Befestigungsbohrung 5 ausgerüstet ist. Die Blech-Hohlprofile 1 werden auf die Enden der Kanäle aufgeschoben und dort befestigt, beispielsweise mittels Punktschweißung. Anschließend werden durch die Befestigungsbohrungen 5 Schrauben 8 gesteckt und mit Muttern 7 gesichert. Abschließend werden die Eckbereiche der Kanäle 9, die stumpf auf die Eckwinkel 6 stoßen, mit Hilfe von Kitt luftdicht abgedichtet.

Das Zusammenstecken der Rahmen aus den acht Einzelteilen 1,6, das Aufschieben auf die Kanalenden, das Anschweißen und das abschließende Abdichten der Kanäle ist reine Handarbeit.

Fig. 16 zeigt einen Querschnitt durch das Blech-Hohlprofil 1. Man erkennt zwischen einem unteren und einem oberen Basisschenkel 1.1, 1.2 einen Spalt 1.3, mit dessen Hilfe das Hohlprofil 1 auf die Kanäle 9 aufgeschoben werden kann. Eine Falte 1.6 sorgt dabei für einen zusätzlichen Halt auf dem Kanal 9. Des weiteren erkennt man einen Stirnschenkel 1.4, der senkrecht zu den Basisschenkeln 1.1, 1.2 gerichtet ist, sowie eine Außenkante 1.5, die parallel zu den Basisschenkeln 1.1, 1.2 verläuft.

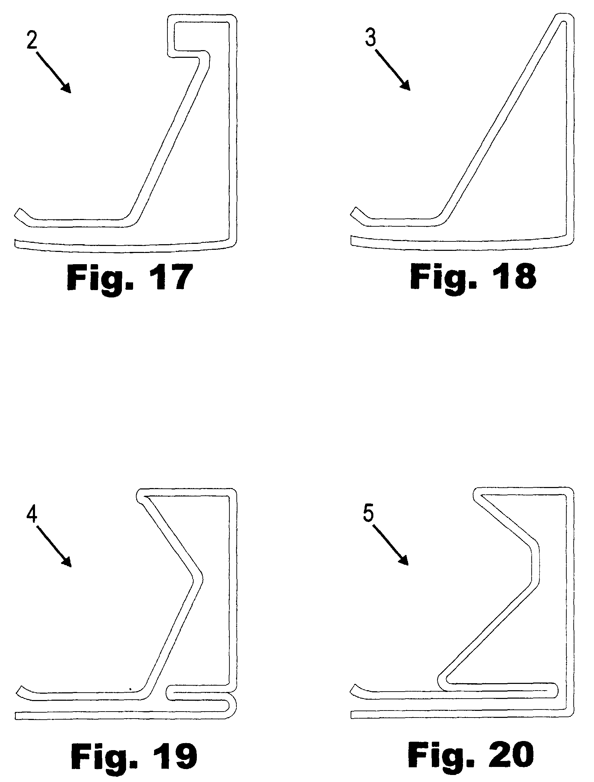

Die Fig. 17 bis 20 zeigen Querschnitte von weiteren handelsüblichen Blech-Hohlprofilen 2, 3, 4.

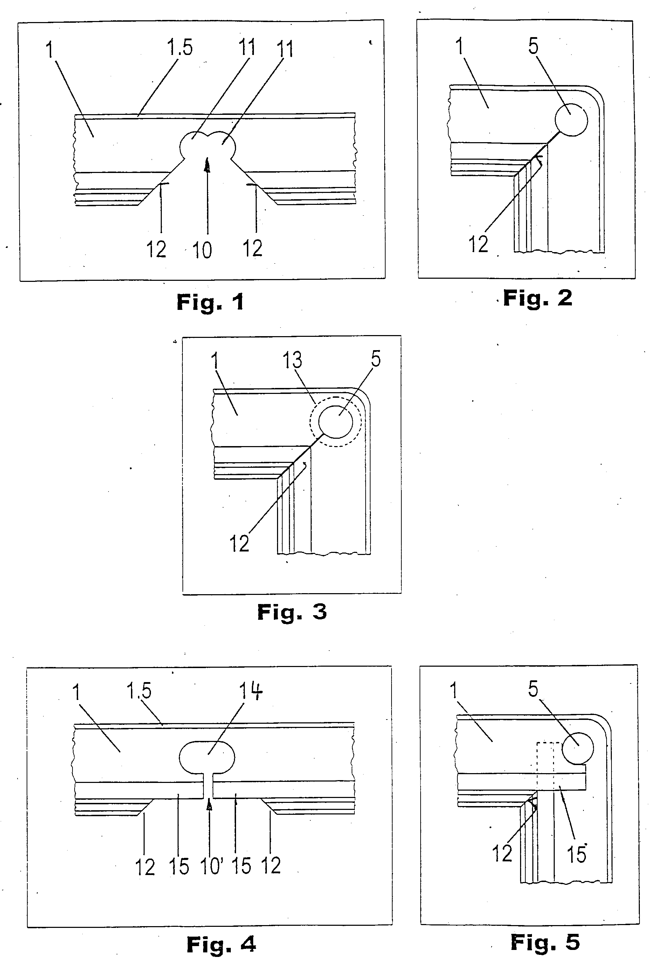

Fig. 1 zeigt im Querschnitt ein erstes Blech-Hohlprofil 1 zur Herstellung eines einstückigen Rahmens. Die Seitenkanten 12 des Gehrungsausschnitts 10 verlaufen wie an sich bekannt im Winkel von 45°. Der Gehrungsschnitt 10 ist so geführt, daß im Bereich des Außenschenkels 1.5 das Blechmaterial stehen bleibt. Halbrunde Ausstanzungen 11 vervollständigen die Blechbearbeitung.

Fig. 2 zeigt eine unter Verwendung des Gehrungsausschnitts 10 nach Fig. 1 fertiggestellte Rahmenecke. Die Seitenkanten 12 des Gehrungsausschnitts 10 stoßen aneinander, aus den halbrunden Ausschnitten 11 hat sich die Befestigungsöffnung 5 gebildet. Die Kanäle 9 können mit Hilfe der bewährten Vierlochverbindung montiert werden.

Fig. 3 zeigt eine Weiterbildung der Rahmenecke nach Fig. 2. Die Befestigungsöffnung 5 ist hier mit einer Unterlegscheibe 13 verstärkt.

Fig. 4 zeigt ein zweites Ausführungsbeispiel. Hier wurde der Gehrungsausschnitt 10' so geführt, daß zwei Blechlappen 15 stehen bleiben. Der Ausschnitt 14 zur Bildung der Befestigungsöffnung 5 ist als Langloch ausgeführt.

Fig. 5 zeigt die unter Verwendung des Gehrungsausschnitts der Fig. 4 hergestellten Rahmenecke. Man erkennt, daß sich die Blechlappen 15 großflächig überlappen. Sobald die Vierlochverbindung hergestellt ist, werden die Blechlappen 15 zusammengepreßt, so daß eine sehr stabile Rahmenecke entsteht.

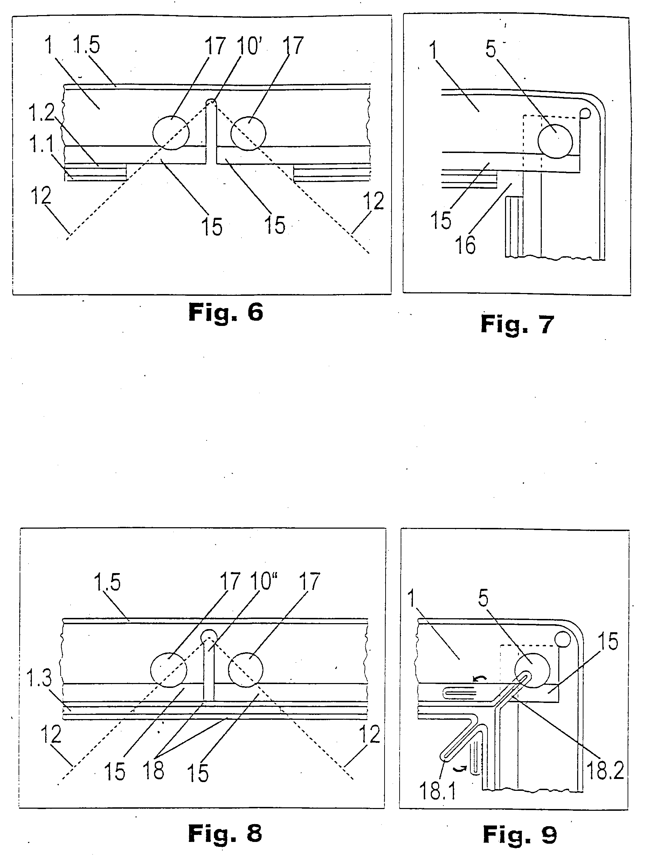

Fig. 6 zeigt ein drittes Ausführungsbeispiel. Auch hier ist der Gehrungsausschnitt 10' so geführt, daß die zwei Blechlappen 15 stehen bleiben. Zur Bildung der Befestigungsöffnung 5 sind zwei Löcher 17 eingeschnitten.

Fig. 7 zeigt die mit dem Gehrungsausschnitt 10' der Fig. 6 hergestellte Rahmenecke. Die Blechlappen 15 überlappen sich großflächig. Durch die rechteckige Begrenzung des Gehrungsausschnitts 10' im Bereich der Basisschenkel 1.1, 1.2 entsteht eine offene Innenkante 16. Diese Ausgestaltung ist insbesondere dann von Vorteil, wenn der Kanal 9 an dieser Stelle eine verdickte Naht aufweist.

Fig. 8 zeigt ein viertes Ausführungsbeispiel. Der Gehrungsschnitt 10'' wurde zunächst analog zu dem der Fig. 6 ausgeführt. Im Unterschied dazu blieb jedoch im Bereich der Einschieböffnung 1.3 je ein integraler Blechstreifen 18 stehen.

Fig. 9 zeigt die unter Verwendung des Gehrungsausschnitts 10'' der Fig. 8 hergestellte Rahmenecke. Die Blechstreifen 18 wurden zu je einer Falte 18.1, 18.2 umgeformt. Damit diese nicht stören, werden sie anschließend so umgelegt, daß sie parallel zu den Längskanten des Rahmens liegen.

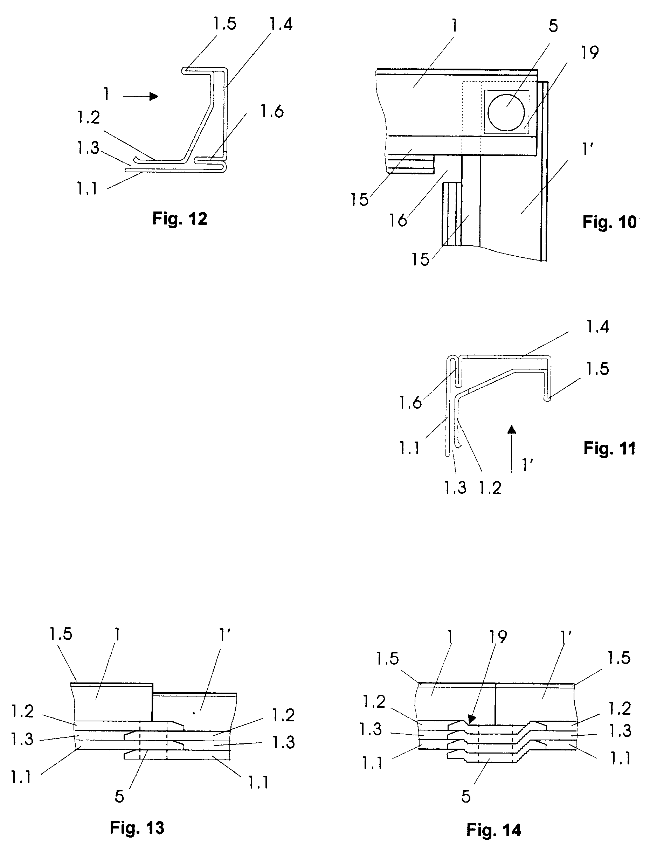

Fig. 10 zeigt ein fünftes Ausführungsbeispiel. Dieses Rahmeneck ist ohne Gehrungsschnitt hergestellt. Es handelt sich dabei um das vierte Eck eines unter Verwendung von drei Gehrungsschnitten hergestellten Rahmens. Die beiden korrespondierenden Enden zweier Blech-Hohlprofile 1, 1' sind mit einer Ausstanzung versehen, die den unteren und oberen Basisschenkel 1.1, 1.2 sowie die Falle 1.5 erfasst. Die genaue Schnittführung ergibt sich aus den Seitenansichten in den Fig. 11 und 12.

Fig. 13 zeigt als Frontsicht, wie die Blechlagen der unteren und oberen Basisschenkel 1.1, 1.2 abwechselnd ineinander geschoben werden. Anschließend werden die Blechlagen 1.1, 1.2 im Bereich ihrer Überlappung durch eine Prägeverbindung 19 mit eckigem Querschnitt mechanisch fest und dauerhaft miteinander verbunden. Dabei werden gleichzeitig die Blechlagen 1.1, 1.2 so gerichtet, dass die Enden der Blech-Hohlprofile 1, 1' miteinanderfluchten. Dies ist in Fig. 14 dargestellt.

Entweder vor oder nach dem Herstellen der Prägeverbindung 19 wird im Bereich der Prägeverbindung 19 die Befestigungsöffnung 5 ausgestanzt. Die so fertiggestellte Eckverbindung entspricht im wesentlichen der der Fig. 7.

Die Fig. 17 bis 20 zeigen Querschnitte weiterer Blech-Hohlprofile 2, 3, 4, 5, die sich ebenfalls zur Herstellung erfindungsgemäßer Rahmenecken eignen.

## Patentansprüche

1. Rahmen aus einem Blech-Hohlprofil (1, 2, 3, 4, 5) zum Anbringen an den Enden von Blechkanälen (9) mit eckigem Querschnitt zwecks Verbindung derselben mittels Schrauben (8) und Muttern (7) an den mit einer Befestigungsöffnung (5) versehenen Rahmenecken (6),
gekennzeichnet durch die Merkmale:
- das Blech-Hohlprofil (1, 2, 3, 4, 5) erhält
-- eine der Eckenanzahl des Blechkanals (9) entsprechende Anzahl von Gehrungsausschnitten (10, 10', 10'')
-- und eine der Anzahl, Größe und Position der Befestigungsöffnungen (5) entsprechende Anzahl von Ausschnitten (11, 14) bzw. Löcher (17),
- das Blech-Hohlprofil (1, 2, 3, 4, 5) ist im Bereich der Gehrungsausschnitte (10, 10', 10'') zu einem Eck gebogen.

2. Rahmen nach Anspruch 1, gekennzeichnet durch das Merkmal:
- die Befestigungsöffnungen (5) sind mit Unterlegscheiben (13) verstärkt.

3. Rahmen nach Anspruch 1 oder 2, gekennzeichnet durch das Merkmal:
- im Bereich der Gehrungsausschnitte (10, 10', 10'') bleiben Blechlappen (15) stehen,
- die Blechlappen (15) überlappen sich am fertigen Rahmeneck im Bereich der Befestigungsbohrung (5).

4. Rahmen nach einem der Ansprüche 1 bis 3, gekennzeichnet durch das Merkmal:
- das Blech-Hohlprofil (1, 2, 3, 4) behält im Bereich des Gehrungsausschnitts (10'') und parallel zu seiner Längskante wenigstens einen integralen Blechstreifen (18),
- nach dem Fertigstellen des Rahmenecks bildet der Blechstreifen (18) eine das Rahmeneck verstärkende Falte (18.1, 18.2).

5. Rahmen nach Anspruch 4, gekennzeichnet durch das Merkmal:
- die Falte (18.1, 18.2) liegt parallel zur Längskante des Blech-Hohlprofils (1).

6. Rahmen nach Anspruch 4 oder 5, gekennzeichnet durch das Merkmal:
- nur die außerhalb des Kanals (9) liegende Falte (18.2) bleibt erhalten.

7. Rahmen aus einem Blech-Hohlprofil (1, 1', 2, 3, 4, 5) zum Anbringen an den Enden von Blechkanälen (9) mit eckigem Querschnitt zwecks Verbindung derselben mittels Schrauben (8) und Muttern (7) an den mit einer Befestigungsöffnung (5) versehenen Rahmenecken (6), gekennzeichnet durch die Merkmale:
- die Blech-Hohlprofile (1, 1') erhalten an ihren korrespondierenden Enden eine Ausstanzung im Bereich von unterem und oberem Basisschenkel (1.1, 1.2) einschließlich der Falte (1.6),
- untere und obere Basisschenkel (1.1, 1.2) werden wechselseitig ineinandergesteckt,
- eine Prägung (19) verbindet die Blechlage (1.1, 1.2) miteinander,
- im Bereich der Prägung (19) entsteht eine Befestigungsöffnung (5).
